# EUROPÄISCHE PATENTANMELDUNG

(11) **EP 2 650 550 A1**
(43) Veröffentlichungstag der Anmeldung: **16.10.2013**
(21) Anmeldenummer: 13401031.3
(22) Anmeldetag: 02.04.2013
(51) Int. Cl.: F16B 7/00

(54) **Steckverbinder für eine Montageschiene**

(30) Priorität: 12.04.2012 DE 102012103121
(71) Anmelder: fischerwerke GmbH & Co. KG, 72178 Waldachtal (DE)
(72) Erfinder: Polach, Petr, 752 01 Kojetin (CZ); Vondra, Lukas, 752 01 Kojetin (CZ)

(57) **Zusammenfassung**

Die Erfindung betrifft einen Steckverbinder (2) für eine Montageschiene (12). Die Erfindung schlägt vor, den Steckverbinder (2) mit Sperrklinken (4) auszubilden, die eine aufgesteckte Montageschiene (12) gegen ein Abziehen sperren.

## Beschreibung

Die Erfindung betrifft einen Steckverbinder für eine Montageschiene mit den Merkmalen des Oberbegriffs des Anspruchs 1.

Montageschienen sind bekannt. Sie bestehen üblicherweise aus Stahl und weisen ein Rechteckrohrprofil mit einem durchgehenden Längsschlitz und meist auf einer gegenüberliegenden Seite eine Lochreihe in einer Längsmittelebene der Montageschiene auf. Löcher sind vielfach Langlöcher.

Die Montageschienen werden mit sog. Flanschhaltern, die an zwei Wänden befestigt werden und in die die Montageschienen von oben eingelegt werden, zwischen zwei Wänden befestigt, oder die Montageschienen werden abgehängt unter einer Decke, einem Unterzug usw. befestigt. Es können Montageschienen in Abständen parallel zueinander oder längs und quer angeordnet werden, wobei quer angeordnete Montageschienen mit ein- oder doppelseitigen Knotenverbindern mit längs angeordneten Montageschienen verbunden werden.

Auf und unter den Montageschienen lassen sich mit Hammerkopfschrauben, Rechteckmuttern, herkömmlichen Muttern, Gewindestangen usw. Sanitär- oder Elektroinstallationen, gelegentlich auch Laufroste für Personen befestigen. Vorstehende Erläuterungen sind beispielhaft und nicht abschließend.

Aufgabe der Erfindung ist, einen Steckverbinder für eine Montageschiene der vorstehend erläuterten Art vorzuschlagen, der ein einfaches und schnelles Verbinden ohne Werkzeug ermöglicht.

Diese Aufgabe wird erfindungsgemäß durch die Merkmale des Anspruchs 1 gelöst. Der erfindungsgemäße Steckverbinder ist zum Verbinden mit einem Ende einer Montageschiene durch Stecken nach Art einer Kupplung und eines Steckers ausgebildet. Es kann, je nach Ausbildung, ein Ende einer Montageschiene auf oder in den Steckverbinder gesteckt werden. Der erfindungsgemäße Steckverbinder weist ein Gesperre auf, das gegen ein Auseinanderziehen der Montageschiene und des Steckverbinders sperrt. Durch das Stecken sind die Montageschiene und der Steckverbinder gegen selbsttätiges und unbeabsichtigtes Lösen gesichert. Vorteil der Erfindung ist die einfache und schnelle Herstellung der Verbindung ohne Werkzeug. Der erfindungsgemäße Steckverbinder kann zur Befestigung eines Endes einer Montageschiene an beispielsweise einer Wand, zur Verbindung zweier Montageschienen in Verlängerung voneinander auf Stoß oder zur Verbindung einer Montageschiene quer an einer anderen oder von zwei Montageschienen auf gegenüberliegenden Seiten quer an einer anderen Montageschiene ausgebildet sein. Die Aufzählung ist nicht abschließend.

Das Gesperre des erfindungsgemäßen Steckverbinders kann beispielsweise durch Federkraft in eine Sperrstellung beaufschlagt werden, in der es an einer gesteckten Montageschiene so anliegt oder in Eingriff steht, dass es gegen Auseinanderziehen sperrt. Eine Ausgestaltung der Erfindung sieht eine Beaufschlagung des Gesperres in die Sperrstellung durch Schwerkraft vor. Diese Ausgestaltung der Erfindung erübrigt ein Federelement oder dgl.

Vorzugsweise ist das Gesperre entsperrbar, es lässt sich beispielsweise manuell außer Eingriff von einer Montageschiene bringen, so dass die Verbindung durch Auseinanderziehen des Steckverbinders und der Montageschiene lösbar ist. Diese Ausgestaltung der Erfindung ermöglicht in einfacher Weise eine Demontage.

Eine Ausgestaltung der Erfindung sieht eine Sperrklinke vor, die an der Montageschiene angreift und gegen ein Auseinanderziehen sperrt, wenn die Montageschiene und der Steckverbinder durch Stecken miteinander verbunden sind. Die Sperrklinke kann form-und/oder kraftschlüssig wirken, wie es beispielsweise von Freiläufen bekannt ist. Die Sperrklinke kann glatt sein und allein aufgrund ihrer Reibung und ihrer Schrägstellung schräg entgegen einer Auseinanderziehrichtung sperren. Die Sperrklinke kann einen oder mehrere Zähne aufweisen, die mit einer glatten oder einer gezahnten Fläche der Montageschiene zusammenwirkt. Die Sperrklinke kann beispielsweise an einem Boden, Seitenwänden oder neben dem Längsschlitz der Montageschiene angreifen. Auch diese Erläuterung ist beispielhaft und nicht abschließend.

Eine bevorzugte Ausgestaltung der Erfindung sieht vor, dass der Steckverbinder eine gesteckte Montageschiene quer zu ihrer Längsrichtung in allen Richtungen hält, also sowohl seitlich als auch nach oben und nach unten. Diese Ausgestaltung der Erfindung verhindert ein Ausheben der Montageschiene, durch das die Montageschiene unbeabsichtigt frei vom Gesperre kommt oder sich unbeabsichtigt vom Steckverbinder löst.

Eine Weiterbildung der Erfindung sieht eine bogenförmige Wirkfläche einer Sperrklinke um eine Schwenkachse der Sperrklinke herum vor, die an mindestens einer Stelle mit einer mit dem Steckverbinder verbundenen Montageschiene in Kontakt steht. Die Wirkfläche ist typischerweise eine schmale und quer zur Bogenform gerade Fläche, die wie gesagt mit der Montageschiene in Kontakt steht und gegen Auseinanderziehen sperrt. In sperrendem Zustand besteht Kraftschluss, d.h. Reibschluss und/oder Formschluss zwischen der Wirkfläche der Rastklinke und der Montageschiene. Für einen Formschluss ist die Wirkfläche insbesondere gezahnt. Die Bogenform kann kreisförmig oder nicht-kreisförmig sein, sie ändert ihren Abstand von der Schwenkachse der Sperrklinke. Diese Ausgestaltung der Erfindung vergrößert eine Toleranz des Gesperres in Bezug auf Abmessungen sowohl der Montageschiene als auch des Steckverbinders.

Eine Ausgestaltung der Erfindung sieht einen Steckverbinder mit einem höhengestuften Stecker vor, auf den Montageschienen unterschiedlicher Höhe steckbar sind. Diese Ausgestaltung der Erfindung ermöglicht die Verbindung von Montageschienen unterschiedlicher Höhe mit einem Steckverbinder.

Die Erfindung wird nachfolgend anhand in der Zeichnung dargestellter Ausführungsbeispiele näher erläutert. Es zeigen:
- Figur 1: ein erstes Ausführungsbeispiel eines erfindungsgemäßen Steckverbinders in perspektivischer Darstellung;
- Figur 2: eine Verbindung einer Montageschiene mit dem Steckverbinder aus Figur 1 gemäß der Erfindung; und
- Figur 3: ein zweites Ausführungsbeispiel eines erfindungsgemäßen Steckverbinders in perspektivischer Darstellung.

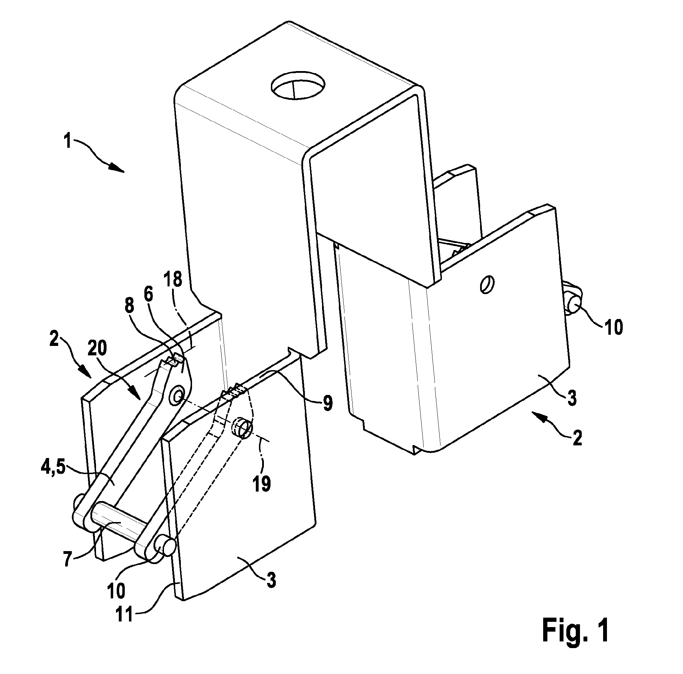

Figur 1 zeigt einen sog. Knotenverbinder 1 mit zwei einander abgewandt angeordneten erfindungsgemäßen Steckverbindern 2. Beide Steckverbinder 2 weisen jeweils zwei parallel zueinander und mit Abstand voneinander sowie in Seitenansicht deckungsgleich angeordnete Laschen 3 auf. An einander zugewandten Innenseiten der Laschen 3 sind zwei Sperrklinken 4 schwenkbar gelagert, die in Seitenansicht ebenfalls deckungsgleich angeordnet sind. Die Sperrklinken 4 weisen einen langen Hebelarm 5 auf, der über Vorderseiten 11 der Laschen 3 übersteht und durch einen Verbindungsstift 7 starr mit dem langen Hebelarm 5 der jeweils zugeordneten anderen Sperrklinke 4 verbunden ist. Die langen Hebelarme 5 verlaufen schräg vom Verbindungsstift 7 nach oben. Kurze Hebelarme 6 der Sperrklinken 4 stehen abgewinkelt von den langen Hebelarmen 5 nach oben ab und weisen an ihren oberen, freien Enden eine Verzahnung 8 auf. Im dargestellten Ausführungsbeispiel befinden sich die freien Enden der kurzen Hebelarme 6 der Sperrklinken 4 mit den Verzahnungen 8 etwas unterhalb einer Oberseite 9 der Laschen 3. Das ist allerdings abhängig von einer noch zu erläuternden Montageschiene, die freien Enden der kurzen Hebelarme 6 können sich auch in Höhe der Oberseiten 9 oder nach oben über die Oberseite 9 der Laschen 3 überstehend enden.

Der Verbindungsstift 7 steht beidseitig nach außen über die Sperrklinken 4 über, allerdings nicht über Außenseiten der Laschen 3. Die überstehenden Enden 10 des Verbindungsstifts 7 liegen an den Vorderseiten 11 der Laschen 3 an, so dass ein Schwenkwinkel der langen Hebelarme 5 der Sperrklinken 4 nach unten begrenzt ist.

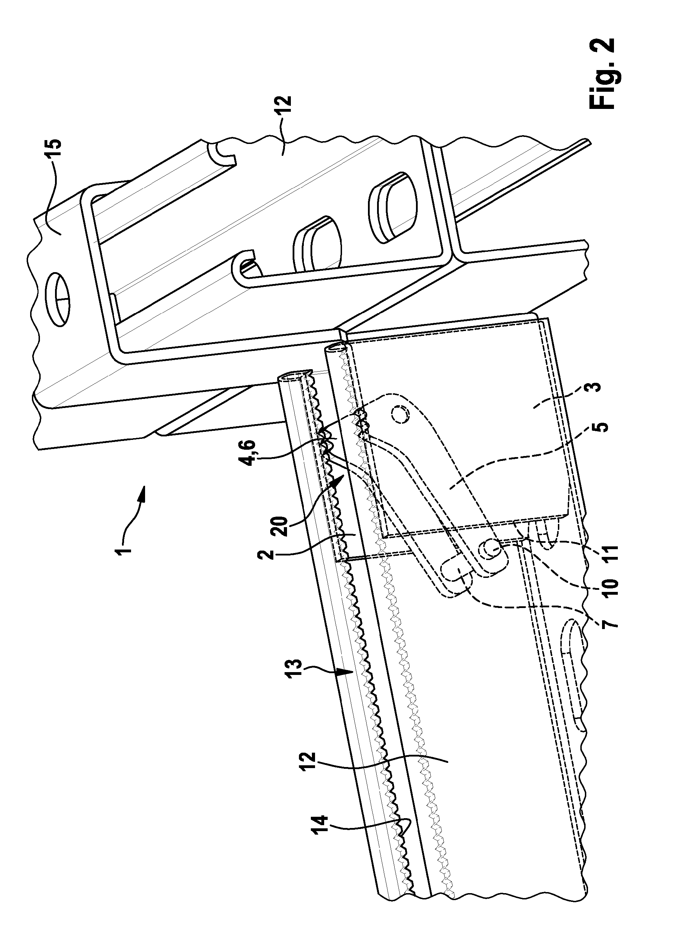

Der Steckverbinder 2 ist zum Aufstecken einer Montageschiene 12, wie in Figur 2 gezeigt, vorgesehen. Die Montageschiene 12 weist ein Rechteckrohrprofil mit einem durchgehenden Längsschlitz 13 an einer Seite auf, die zum Stecken auf den Steckverbinder 2 oben angeordnet und nachfolgend als Oberseite bezeichnet wird. Seitlich des Längsschlitz 13 ist die Montageschiene 12 U-förmig nach innen abgekantet und übergreift die Oberseiten 9 der Laschen 3 des Steckverbinders 2. Ins Innere der Montageschiene 12 gerichtete Ränder seitlich des Längsschlitz 13 weisen eine Riffelung 14 auf, die auch als Verzahnung aufgefasst werden kann und die mit der Verzahnung 8 der Sperrklinken 4 zusammenwirkt. Die Riffelung 14 ist nicht zwingend für die Erfindung.

Zum Verbinden mit dem Steckverbinder 2 wird die Montageschiene 12 in ihrer Längsrichtung auf die Laschen 3 des Steckverbinders 2 gesteckt. Dabei gleiten die in das Innere der Montageschiene 12 gerichteten Ränder seitlich des Längsschlitz 13 auf den freien Enden der kurzen Hebelarme 6 der Sperrklinken 4, die mit den Verzahnungen 8 versehen sind, und schwenken die Sperrklinken 4, wie in Figur 2 zu sehen, etwas im Uhrzeigersinn. Die seitlich überstehenden Enden 10 des Verbindungsstifts 7 heben von den Vorderseiten 11 der Laschen 3 ab, die Schwerkraft hält die Verzahnung 8 der Sperrklinken 4 in Anlage und in Eingriff mit den in das Innere der Montageschiene 12 gerichteten Rändern seitlich des Längsschlitz 13. Die Sperrklinken 4 sperren die Montageschiene 12 gegen ein Abziehen von den Laschen 3 des Steckverbinders 2. Die Laschen 3 sind so hoch wie eine lichte Höhe einer Innenseite der Montageschiene 12, so dass die Montageschiene 12 nicht nach oben aushebbar ist. Ein Lösen der Montageschiene 12 ist nur möglich, indem die langen Hebel 5 der Sperrklinken 4 insbesondere mittels des Verbindungsstifts 7 angehoben werden, so dass die in das Innere der Montageschiene 12 gerichteten Ränder seitlich des Längsschlitz 13 freikommen von den freien Enden der kurzen Hebelarme 6 der Sperrklinken 4 mit der Verzahnung 8. Die Montageschiene 12 lässt sich dann in ihrer Längsrichtung von den Laschen 3 des Steckverbinders 2 ziehen.

Der Steckverbinder 2 mit den Laschen 3 kann auch als Stecker und die Montageschiene 12 als Kupplung einer Steckverbindung aufgefasst werden. Die Sperrklinken 4 bilden ein Gesperre 20, das die auf den Steckverbinder 2 gesteckte Montageschiene 12 gegen ein Abziehen und damit gegen ein Lösen vom Steckverbinder 2 sperren.

Wie erläutert, sind die beiden Steckverbinder 2 in Figuren 1 und 2 Teil eines Knotenverbinders 1, sie sind durch einen U-förmigen Sattel 15 miteinander verbunden, der unten offen ist, d.h. das "U" steht auf dem Kopf. Der Sattel 15 des Knotenverbinders 1 ist auf eine Montageschiene 12 aufsetzbar, die quer zwischen den beiden Montageschienen 12 hindurchläuft, die mit den beiden Steckverbindern 2 verbunden sind. Im Ausführungsbeispiel sind zwei Montageschienen 12 im Sattel 15 des Knotenverbinders 1 aufeinander gesetzt.

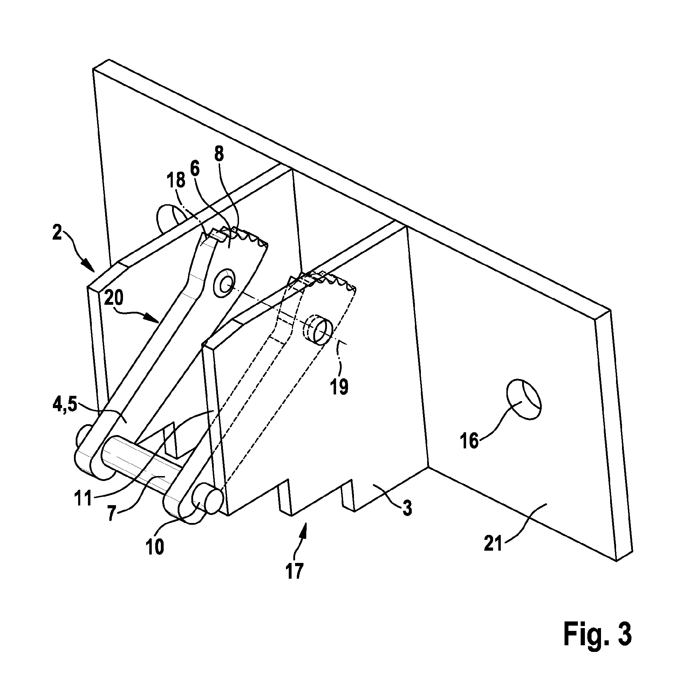

Bei der nachfolgenden Erläuterung der Figur 3 werden für gleiche Bauelemente mit Figuren 1 und 2 übereinstimmende Bezugszahlen verwendet. Es werden im Wesentlichen die Unterschiede erläutert und ergänzend die Ausführungen zu Figuren 1 und 2 in Bezug genommen. In Figur 3 ist nur ein Steckverbinder 2 vorhanden, der nicht Bestandteil eines Knotenverbinders ist, sondern eine Flanschplatte 21 mit Befestigungslöchern 16 zur Befestigung an einer nicht dargestellten Wand aufweist.

Untere Ränder der Laschen 3 weisen eine treppenförmige Stufung 17 auf, so dass auch niedrigere Montageschienen auf den Steckverbinder 2 gesteckt werden können. Im weiteren Unterschied zu Figuren 1 und 2 sind die freien Ränder der kurzen Hebelarme 6 der Sperrklinken 4 länger und die Verzahnung 8 befindet sich nicht auf einer gedachten, ebenen Wirkfläche, sondern auf einer bogenförmigen Wirkfläche, deren Abstand von einer Schwenkachse 19 der Sperrklinken 4 sich vergrößert. Mit "Wirkfläche" ist eine Zahnköpfe der Verzahnung 8 verbindende Fläche gemeint, deren Mantellinie 18 als Strichpunktlinie gezeichnet ist. Die bogenförmige Wirkfläche vergrößert einen Toleranzbereich der Sperrklinken 4 bezüglich einer Höhe sowohl der Laschen 3 des Steckverbinders 2 als auch der Montageschiene 12, die in Figur 3 nicht gezeichnet ist.

Sowohl die Stufung 17 der unteren Ränder der Laschen 3 als auch die bogenförmig angeordnete Verzahnung 8 der Sperrklinken 4 können am Steckverbinder 2 der Figuren 1 und 2 vorgesehen sein, als auch umgekehrt der Steckverbinder 2 aus Figur 3 wie diejenigen aus Figuren 1 und 2 ausgeführt sein können. Der Steckverbinder 2 ist nicht auf einen Knotenverbinder 1 oder die Sattelplatte 21 beschränkt. Auch ist die Verzahnung 8 an den freien Enden der kurzen Hebelarme 6 der Sperrklinken 4 nicht unbedingt erforderlich, es sind auch glatte Wirkflächen an den freien Enden der kurzen Hebelarme 6 der Sperrklinken 4 möglich, die die Montageschiene 12 durch Kraftschluss gegen ein Abziehen vom Steckverbinder 2 sperren (nicht dargestellt).

**Bezugszeichenliste**

| | **Steckverbinder für eine Montageschiene** |
|---|---|
| 1 | Knotenverbinder |
| 2 | Steckverbinder |
| 3 | Lasche |
| 4 | Sperrklinke |
| 5 | langer Hebelarm |
| 6 | kurzer Hebelarm |
| 7 | Verbindungsstift |
| 8 | Verzahnung |
| 9 | Oberseite der Lasche 3 |
| 10 | seitliches Ende |
| 11 | Vorderseite der Lasche 3 |
| 12 | Montageschiene |
| 13 | Längsschlitz |
| 14 | Riffelung |
| 15 | Sattel |
| 16 | Befestigungsloch |
| 17 | treppenartige Stufung |
| 18 | Mantellinie |
| 19 | Schwenkachse |
| 20 | Gesperre |
| 21 | Flanschplatte |

## Patentansprüche

1. Steckverbinder für eine Montageschiene (12), der durch Stecken mit einem Ende der Montageschiene (12) verbindbar ist, **dadurch gekennzeichnet, dass** der Steckverbinder (2) ein Gesperre (20) aufweist, das gegen ein Auseinanderziehen der Montageschiene (12) und des Steckverbinders (2) sperrt.

2. Steckverbinder nach Anspruch 1, **dadurch gekennzeichnet, dass** das Gesperre (20) durch Schwerkraft in eine Sperrstellung beaufschlagt wird.

3. Steckverbinder nach Anspruch 1, **dadurch gekennzeichnet, dass** das Gesperre (20) entsperrbar ist.

4. Steckverbinder nach Anspruch 1, **dadurch gekennzeichnet, dass** das Gesperre (20) eine Sperrklinke (4) aufweist, die an der Montageschiene (12) angreift.

5. Steckverbinder nach Anspruch 1, **dadurch gekennzeichnet, dass** der Steckverbinder (2) die Montageschiene (12) quer zu ihrer Längsrichtung in allen Richtungen hält.

6. Steckverbinder nach Anspruch 4, **dadurch gekennzeichnet, dass** die Sperrklinke (4) eine bogenförmige Wirkfläche um eine Schwenkachse (19) der Sperrklinke (4) herum aufweist, die an mindestens einer Stelle mit einer mit dem Steckverbinder (2) verbundenen Montageschiene (12) in Kontakt steht.

7. Steckverbinder nach Anspruch 1, **dadurch gekennzeichnet, dass** der Steckverbinder (2) eine Stufung (17) zum Aufstecken von Montageschienen (12) unterschiedlicher Höhe aufweist.
